# EUROPEAN PATENT SPECIFICATION

(11) **EP 3 320 023 B1**
(45) Date of publication and mention of the grant of the patent: **03.06.2020**
(21) Application number: 16821821.2
(22) Date of filing: 29.06.2016
(51) Int. Cl.: C08G 69/26, C08L 77/06, C08G 69/34, C08L 77/08, C08G 73/06, C08L 79/04

(54) **LOW VISCOSITY TRANSPARENT POLYAMIDE**
TRANSPARENTES POLYAMID VON GERINGER VISKOSITÄT
POLYAMIDE TRANSPARENT À FAIBLE VISCOSITÉ

(30) Priority: 09.07.2015 US 201562190304 P
(43) Date of publication of application: 16.05.2018
(73) Proprietor: Henkel IP & Holding GmbH, 40589 Düsseldorf (DE)
(72) Inventor: NATANIEL, Tina, St. Charles, Illinois 60174 (US); HEINRICH, Dwight, Aurora, Illinois 60504 (US)
(86) International application number: PCT/US2016/039941
(87) International publication number: WO 2017/007648

(56) References cited:
- WO-A1-99/41297
- US-A- 4 182 382
- US-A- 4 452 974
- US-A1- 2008 221 234
- US-A1- 2014 271 526

## Description

### TECHNICAL FIELD

This disclosure relates generally to polyamides, and more particularly to transparent polyamides having low melt viscosity, low glass transition temperature, high heat resistance, cold flexibility, good adhesion, and good UV resistance.

### BACKGROUND OF THE INVENTION

Polyamides are polymers formed by repeating units linked through amide bonds. Naturally occurring polyamides include all proteins. Artificially made polyamides can be formed by a number of processes including by step-growth polymerization, by ring opening polymerization and by solid phase synthesis. The three main types of polyamides comprise aliphatic polyamides, semi-aromatic, and aromatic. The aliphatic polyamides are composed of linear chains with examples including the nylon compositions like nylon 6 and nylon 66. The semi-aromatic polyamides are also called polyphthalamides and examples include those made from hexamethylenediamine and terephthalic acid and include examples like trogamid® and amodel®. The aromatic polyamides are also known as aramides and typically include paraphenyldiamine and terephthalic acid, examples include kevlar® and spectra®.

Polyamides are used extensively in the textile industry, automotive applications, carpeting, and in sportswear and sports gear. Transparent polyamides are often characterized by good low temperature impact strength and high light transmittance. Undesirably they often exhibit high melt viscosity making them difficult to process, especially when compared to other polymers available for molding procedures. The transparent polyamides find use in a wide variety of settings including: as over molding or encapsulating compositions to cover Light Emitting Diodes (LEDs), circuit boards, flash drives and other electronic components. They can also be used in blow molding processes. The typical transparent polyamides are prepared from aromatic or cycloaliphatic components, they have high glass transition temperatures (Tg) and the polyamides produced tend to have low adhesion.

It is desirable to produce polyamides that exhibit high transparency, low melt viscosity, high heat resistance, high hardness, cold flexibility, good adhesion to substrates, and good UV resistance.

### SUMMARY OF THE INVENTION

In general terms in one embodiment this disclosure provides a transparent polyamide comprising a reaction product of: a fully hydrogenated dimer acid; a second dicarboxylic acid; a diamine; and a dipiperidine. Optionally, the polyamides can be combined with at least one additive selected from the group consisting of an antioxidant, a light stabilizer, a hindered amine light stabilizer, a UV absorber, and mixtures thereof.

In one embodiment, the present invention is a method of forming a transparent polyamide comprising the steps of: a) forming a reaction mixture by combining a fully hydrogenated dimer acid; a second dicarboxylic acid; a diamine; and a dipiperidine in a reaction vessel; b) heating the reaction mixture to an elevated temperature and maintaining the reaction mixture at an elevated temperature for a predetermined time until the reaction is substantially completed; c) subjecting the substantially reacted mixture to a vacuum while maintaining at an elevated temperature; and d) removing the vacuum and cooling the reaction products to room temperature, thereby recovering the formed polyamide.

These and other features and advantages of this invention will become more apparent to those skilled in the art from the detailed description of a preferred embodiment. The drawings that accompany the detailed description are described below.

### DETAILED DESCRIPTION OF A PREFERRED EMBODIMENT

The present disclosure in one embodiment is directed to transparent polyamides that exhibit high light transmittance, methods of making the same and compositions including the same. The subject transparent polyamides also exhibit low melt viscosity, high heat resistance, high hardness, good cold flexibility, good adhesion and good UV resistance. The excellent low melt viscosity makes the disclosed polyamides especially useful for low pressure molding processes.

The disclosed polyamides comprise the reaction products of a fully hydrogenated dimer-acid; a second dicarboxylic acid; an alkylene diamine; a dipiperidine; optionally a second diamine; and optionally additives.

Dimer fatty acids are prepared by a complex oligomerization reaction of unsaturated fatty acids (predominantly C₁₈ types). The dimerization yields a mixture of mono-, di- and tri-carboxylic acids. The mixture can be distilled, purified and hydrogenated to provide a high purity, fully hydrogenated, C₃₆ dimer acid. Especially useful transparent polyamides are obtained when fully hydrogenated C₃₆ dimer-acid is used. These fully hydrogenated C₃₆ dimer-acids are available as, for example, PRIPOL 1009 from Croda or EMPOL 1008 from BASF.

The second dicarboxylic acid can be any linear, saturated dicarboxylic acid having 6 to 14 carbon atoms. Branched dicarboxylic acids, cycloaliphatic dicarboxylic acids and aromatic dicarboxylic acids are preferably not used. Exemplary dicarboxylic acids include adipic acid; azelaic acid; sebacic acid; dodecandioic acid (DDDA); and tetradecanedioic acid (TDDA). Especially useful transparent polyamides are obtained when the second dicarboxylic acid comprises, consists essentially of, or consists of adipic acid.

The alkylene diamine is comprised of at least one alkylene diamine having from 2 to 8 carbon atoms. The alkylene diamine in one embodiment corresponds to the formula: H₂N--(CHR)ₙ--NH₂ where "n" is 2 to 8 and R is hydrogen or lower (e.g., C₁-C₄) alkyl. The R groups within a single molecule may be the same or different. Linear alkylene diamines (where all R groups are H) are used in one embodiment of the invention, although branched chain alkylene diamines (where at least one R is a C₁-C₄ alkyl group) could also be used (either alone or in combination with one or more straight chain alkylene diamines). Illustrative non-limiting examples of alkylene diamines include ethylenediamine, 1,2-propylenediamine, 1,3-propylenediamine, tetramethylenediamine, pentamethylenediamine, hexamethylenediamine, octamethylenediamine, 2-methyl-1,5-pentanediamine, and mixtures thereof. Especially useful transparent polyamides are obtained when the alkylene diamine comprises, consists essentially of, or consists of hexamethylenediamine.

The dipiperidine can be any compound having two linked pyridine moieties. The linking moiety is advantageously a hydrocarbon such as a C₁ to C₆ linear alkyl group. The linking moiety is bonded to a carbon atom on each of the pyridine moieties. Especially useful transparent polyamides are obtained when the dipiperidine comprises, consists essentially of, or consists of 4,4'(1,3 propanediyl) bis-(piperidine), which is commercially available from Reilly Industries, Inc.

The reactants can optionally further comprise a second diamine. Useful materials for the second diamine include 3-(Aminomethyl)-3,5,5-trimethylcyclohexanamine (isophorone diamine); piperazine, 2-methylpentamethylenediamine, polyoxyalkylene diamine such as poly(ethylene glycol) diamine and poly(propylene glycol) diamine, available as Jeffamine® D series from Huntsman; and mixtures thereof.

The composition can optionally include one or more additives known in the polyamide art. Some exemplary additives include antioxidants, light stabilizers; defoamers and mixtures thereof.

Useful antioxidants include all of those known in the art for use with polyamides. Examples of useful antioxidants include Irganox® antioxidants available from BASF such as Irganox® 1098 (N,N'-hexane-1,6-diylbis(3-(3,5-di-tert.-butyl-4-hydroxyphenylpropionamide)). The antioxidants are generally used at levels of from 1.5 to 2.0% by weight based on the total weight of the composition.

One useful class of light stabilizers are any of the hindered amine light stabilizer (HALS). These are often derivatives of 2,2,6,6-tetramethyl piperidine and are extremely efficient stabilizers against light-induced degradation of most polymers, they are typically used at a level of 1 to 2% by weight based on the total weight of the composition. Other useful light stabilizers include UV absorbers, typically used at a level of from 0.5 to 2.0% by weight based on the total weight of the composition. Examples of HALS and UV light absorbers are known to those of skill in the art and include, by way of example only, the Tinuvin® light stabilizers available from BASF such as Tinuvin® 292, 312, 328, 384-2 and Uvinul® light stabilizers available from BASF such as Uvinul® 3039.

Useful defoamers include conventional silicone defoamers.

An exemplary transparent polyamide and composition is shown below.

| Component | Preferred % by weight based on total composition weight | Preferred equivalent % |
|---|---|---|
| fully hydrogenated dimer-acid | 50 - 70 | 60 - 70 |
| second dicarboxylic acid | 5 - 12 | 30 - 40 |
| alkylene diamine | 10 - 18 | 62 - 90 |
| dipiperidine | 2 - 8 | 10 - 20 |
| second diamine | 0 - 20 | 0 - 25 |
| additives | 0 - 10 | |

The transparent polyamide and composition according to the present disclosure will have the following characteristics.

| Parameter | Range |
|---|---|
| Color (Gardner color number, 2.54 mm (100 mil) specimen) | 1 max |
| Transparency (% transmission) | 88 % min |
| Viscosity at 210° C | 5900 to 7800 mPas (59 to 78 Poise) |
| Softening point | 150 to 180° C |
| Mandrel bend | - 15° to-30° C |
| Glass transition temperature (Tg) | +1° to -10° C |

Preferably the transparent polyamide and composition according to the present disclosure have the following characteristics.

| Parameter | Range |
|---|---|
| Color (Gardner color number, 2.54 mm (100 mil) specimen) | 1 max |
| Transparency (% transmission at 850 nm) | 88 % min |
| Viscosity at 210° C | 5500 to 8000 mPas (55 to 80 P) |
| Softening point | 150 to 180° C |
| 2% Modulus | 44815.92 to 137895.15 kPa (6500 to 20,000 psi) |
| Elongation | 350% to 800% |
| Ultimate tensile strength | 6894.76 to 14478.99 kPa (1000 to 2100 psi) |
| Yield point | 2757.9 to 11721.09 kPa (400 to 1700 psi) |
| Shore A hardness | 83 to 95 |
| Mandrel bend | -15° to -30° C |
| Glass transition temperature (Tg) | +1° to -10° C |
| Moisture uptake, 7 days (% by weight) | 0.6% to 1.7% |
| Temperature creep resistance (1.36 kg (3 lbs.) load, 1°/minute) | 140 to 160° C |

In some embodiments the transparent polyamide has a color of 1 or less and a transparency of 88% or more.

In one method of making the disclosed polyamides, all reactants are initially charged to the reaction vessel. The reactant mixture is heated under an inert gas blanket to a temperature and for a time sufficient to allow the reaction to substantially proceed. Typical reactant temperatures will be above 200°C and preferably above 215°C and typical times will be greater than 60 minutes and more typically greater than 90 minutes.

The reactants are subsequently maintained at an elevated temperature and subjected to a vacuum for a period of time to remove volatile components. Typical reactant temperatures will be above 200°C and preferably above 215°C. Typical vacuum will be above 266.65 Pa (2 mm Hg) and more typically 266.65 to 1999.84 Pa (2 to 15 mm Hg). Typical times will be greater than 10 minutes and more typically greater than 15 minutes.

### Experimental Procedures

The following procedures were used for testing.

Transparency was tested by measuring transmission of light at 800 - 850 nm through a 2 mm thick sample of the polyamide.

Color was tested using Gardner apparatus a 2.54 mm (100 mil) thick sample of the polyamide.

The hot melt viscosity was measured at 210°C using ASTM D 3236-88 with a Brookfield Viscometer with a 27 spindle at 20 rpm

The softening point was measured using the Ring and Ball method according to ASTM E 28 -99.

The 2% modulus was determined using ASTM D 638.

The elongation was determined using ASTM D 638 and measuring until the specimen breaks.

The ultimate tensile strength and yield point were determined using ASTM D 638.

The Shore A and Shore D were determined using ASTM D 2240.

The Mandrel bend test was performed as follows. Samples are prepared into 76.2 mm x 12.7 mm x 1.27 mm (3 inch x 0.5 inch x 50 mils) strips. The strips and mandrels are cooled in a freezer for at least 30 minutes at the test temperature. A cooled test strip is wrapped around a ½ (12.7 mm), ¼ (6.35 mm), ⅛ (3.175 mm) inch cylindrical mandrel. The freezer temperature is decreased 5 °C after each test. The coldest temperature at which the strip can be wrapped 360 degrees around the mandrel without cracking or breaking is the mandrel bend temperature.

The glass transition temperature (Tg) was determined using differential scanning calorimetry (DSC). In a first run samples were heated from 0 °C to 250 °C at a rate of 10 °C/min and cooled from 250 °C to -60 °C at a rate of -10 °C/min. In a second run samples were heated from -60 °C to 250 °C at a rate of 15 °C/min. The Tg value is taken from the DSC second run.

Melt flow rate was determined using ASTM D1238 .

The moisture uptake was determined by weight gain of samples immersed in water for 24 hours or 168 hours.

The temperature creep resistance was determined by recording the temperature at which a polyamide sample, bonded to cardboard substrates with a 0.00065 m² (one square inch) bond area on each substrate, exhibits shear failure under a constant 1.36 kg (three pound) load.

### Examples

The following method was used for making Examples. The part 1 components were combined and polymerization was carried out at a reaction temperature of 216°C for 90 minutes. Subsequently, the reactant mixture was held at 216°C and placed under a vacuum of 666.61 - 1333.32 Pa (5 - 10 mm Hg) for 15 minutes. The resultant transparent polyamides were combined with the part 2 components to form transparent polyamide compositions.

The transparent polyamide of Example 1 is provided in the Table below.

| Example 1 | | |
|---|---|---|
| Component | Equivalent % | Weight % |
| PART 1 | | |
| Hydrogenated C18 dimer-acid | 70 | 65.19 |
| Adipic acid | 30 | 7.23 |
| Hexamethylenediamine (70%) | 90 | 22.64 |
| 4,4' (1,3 propanediyl) bis-(piperidine) | 10 | 3.21 |
| Irganox® 1098 | | 1.70 |
| Phosphoric acid | | 0.02 |
| Silicone antifoam | | 0.01 |
| TOTAL | | 100 |

The transparent polyamide composition of Example 1 is provided in the Table below.

| Example 1 | | |
|---|---|---|
| Component | | Weight % |
| Reaction results from Example 1, Part 1 | | 97.8 |
| Light stabilizer and UV absorber | | 2.2 |
| | | |
| TOTAL | | 100 |

The transparent polyamide of Example 2 is provided in the Table below.

| Example 2 | | |
|---|---|---|
| Component | Equivalent % | Weight % |
| PART 1 | | |
| Hydrogenated C18 dimer-acid | 70 | 64.49 |
| Adipic acid | 30 | 7.15 |
| Hexamethylenediamine (70%) | 80 | 20.19 |
| 4,4' (1,3 propanediyl) bis-(piperidine) | 20 | 6.44 |
| Irganox® 1098 | | 1.70 |
| Phosphoric acid | | 0.02 |
| Silicone Antifoam | | 0.01 |
| TOTAL | | 100 |

The transparent polyamide composition of Example 2 is provided in the Table below.

| Example 2 | | |
|---|---|---|
| Component | Equivalent % | Weight % |
| Reaction results from Example 2, Part 1 | | 97.8 |
| light stabilizers | | 2.2 |
| | | |
| TOTAL | | 100 |

The transparent polyamide of Example 3 is provided in the Table below.

| Example 3 | | |
|---|---|---|
| Component | Equivalent % | Weight % |
| PART 1 | | |
| Hydrogenated C18 dimer-acid | 60 | 55.05 |
| Adipic acid | 40 | 9.50 |
| Hexamethylenediamine (70%) | 62 | 15.80 |
| 4,4' (1,3 propanediyl) bis-(piperidine) | 20 | 6.51 |
| Isophorone diamine | 3 | 0.80 |
| Jeffamine® D-400 polyetheramine | 15 | 10.61 |
| Irganox® 1098 | | 1.70 |
| Phosphoric acid | | 0.02 |
| Antifoam | | 0.01 |
| TOTAL | | 100 |
| TOTAL | | 100 |

The transparent polyamide composition of Example 3 is provided in the Table below.

| Example 3 | | |
|---|---|---|
| Component | Equivalent % | Weight % |
| PART 2 | | |
| Reaction results from Example 3, Part 1 | | 98.0 |
| light stabilizers | | 2.0 |
| | | |
| TOTAL | | 100 |

The polyamides of Examples 4 to 7 are provided in the Table below. Percentages shown are weight percentages. Each of Examples 4 to 7 was made using the same Acid / Amine ratio and the same equivalent ratio as Example 1 for each ingredient.

| Component | Example 4 | Example 5 | Example 6 | Example 7 |
|---|---|---|---|---|
| Aliphatic Dicarboxylic Acid | Azelaic Acid | Sebacic Acid | Dodecenedioic Acid | Tetradecanedioic Acid |
| | Wt.% | Wt.% | Wt.% | Wt.% |
| PART 1 | | | | |
| Hydrogenated C18 dimer-acid | 63.77 | 63.40 | 62.54 | 61.70 |
| Azelaic acid (C₉) | 9.21 | none | none | none |
| Sebacic acid (C₁₀) | none | 9.73 | none | none |
| DDDA (C₁₂) | none | none | 10.93 | none |
| TDDA (C₁₄) | none | none | none | 12.10 |
| Hexamethylenediamine (70%) | 22.15 | 22.02 | 21.72 | 21.43 |
| 4,4' (1,3 propanediyl) bis-(piperidine) | 3.14 | 3.12 | 3.08 | 3.04 |
| Irganox® 1098 | 1.70 | 1.70 | 1.70 | 1.70 |
| Phosphoric acid | 0.02 | 0.02 | 0.02 | 0.02 |
| Antifoam | 0.01 | 0.01 | 0.01 | 0.01 |
| TOTAL | 100.00 | 100.00 | 100.00 | 100.00 |

The polyamide compositions of Examples 4 to 7 are provided in the Table below. Percentages shown are weight percentages. Each of Examples 4 to 7 was made using the same Acid / Amine ratio and the same equivalent ratio as Example 1 for each ingredient.

| Component | Example 4 | Example 5 | Example 6 | Example 7 |
|---|---|---|---|---|
| Aliphatic Dicarboxylic Acid | Azelaic Acid | Sebacic Acid | Dodecenedioic Acid | Tetradecanedioic Acid |
| | Wt.% | Wt.% | Wt.% | Wt.% |
| PART 2 | | | | |
| Reaction results from Part 1 | 98.0 | 97.8 | 98.0 | 98.0 |
| Light stabilizer & UV absorber | 2.0 | 2.2 | 2.0 | 2.0 |
| | | | | |
| TOTAL | 100.0 | 100.0 | 100.0 | 100.0 |

### Experimental Results

Examples 1, 2 and 3 were tested for a variety of physical characteristics and the results are presented in the Table below.

| Parameter | Example 1 | Example 2 | Example 3 |
|---|---|---|---|
| Color (Gardner color number, 2.54 mm (100 mil) specimen) | <1 | <1 | <1 |
| Transparency | 91.5% | NT¹ | NT¹ |
| Viscosity at 210°C (Poise) | 65 | 78 | 59 |
| Softening point (°C) | 180 | 165 | 165 |
| 2% Modulus (psi) | 13,000 | 11,350 | 6560 |
| Elongation (%) | 475 | 540 | 800 |
| Ultimate tensile strength (psi) | 2000 | 1460 | 1040 |
| Yield point (psi) | 1100 | 845 | 440 |
| Shore A hardness | 95 | 92 | 83 |
| Mandrel bend | - 20° C | - 30° C | -30° C |
| Glass transition temperature (Tg) | - 4° C | - 6° C | -10° C |
| Moisture uptake, 7 days (% by weight) | 0.7% | 0.8% | 1.7% |
| Temperature creep resistance (1.36 kg (3 lbs.) load, 1° C/minute) | 160° C | 153° C | 142° C |

| | | | |
|---|---|---|---|
| NT¹ = not tested ; visually clear transparent 1000 kPa = 145 psi 1 Poise = 100 mPas | | | |

Examples 4 - 7 were tested for a variety of physical characteristics and the results are presented in the Table below.

| property (unit) | Example 4 | Example 5 | Example 6 | Example 7 |
|---|---|---|---|---|
| Aliphatic dicarboxylic acid | Azelaic acid | Sebacic acid | DDDA | TDDA |
| Color (Gardner color number, 2.54 mm (100 mil) specimen) | <1 | <1 | <1 | <1 |
| Transparency | NT¹ | NT¹ | NT¹ | NT¹ |
| Viscosity at 210 °C (Poise) | 62 | 73 | 74 | 75 |
| Softening point (°C) | 153 | 160 | 157 | 155 |
| 2% Modulus (psi) | 17,000 | 16,300 | 15,000 | 15,200 |
| Elongation (%) | 390 | 385 | 445 | 420 |
| Ultimate tensile strength (psi) | 1600 | 1870 | 2060 | 2040 |
| Yield point (psi) | 1525 | 1670 | 1240 | 1340 |
| Shore A hardness | 95 | 95 | 95 | 95 |
| Mandrel bend (°C) | -15 | -15 | -15 | -15 |
| Glass transition temperature (Tg) (°C) | +1 | -1 | -2 | -1 |
| Moisture uptake, 7 days (% by weight) | 0.6 | 0.6 | 0.6 | 0.6 |
| Temperature creep resistance (1.36 kg (3 lbs.) load, 1°C/minute) (°C) | 143 | 154 | 149 | 147 |

| | | | | |
|---|---|---|---|---|
| NT¹ = not tested ; visually clear transparent 1000 kPa = 145 psi 1 Poise = 100 mPas | | | | |

Rilsan Clear is a family of transparent, cycloaliphatic polyamide available from Arkema. Macromelt 6900 and 6900B are biobased, transparent polyamides available from Henkel Corporation. Properties of these known polyamides are provided in the Table below.

| Parameter | Rilsan Clear G350-PA | Macromelt 6900 / 6900B |
|---|---|---|
| Color (visual) | colorless | colorless |
| Transparency | 91.5% | NT¹ |
| Viscosity at 210 °C (Poise) | very high² | very high² |
| Softening point | N/A | 130 - 155 °C |
| 2% Modulus (psi) | N/A | 20,000 |
| Elongation (%) | N/A | 550 |
| Ultimate tensile strength (psi) | N/A | 3500 |
| Yield point (psi) | N/A | 1200 |
| Glass transition temperature (Tg) | 145 °C | 5 °C |
| Melt flow rate at 2.16 Kg load (cm³/10 min.) | 6 at 275°C | 10 at 175°C |
| Moisture uptake, 7 days (% by weight) | N/A | < 0.5 |
| Temperature creep resistance (1.36 kg (3 lbs.) load, 1°C/minute) | N/A | 98 |

| | | |
|---|---|---|
| NT¹ = not tested ; visually clear transparent 1000 kPa = 145 psi 1 Poise = 100 mPas 2 The viscosities of Rilsan Clear G350-PA and Macromelt 6900 / 6900B are so high that it is impossible to measure them with the Brookfield viscometer. | | |

The polyamides prepared according to the present invention have a much lower molten viscosity compared to known transparent polyamides. These low viscosities allow the disclosed polyamides to serve very well in low pressure molding operations. In addition, the polyamides have high light transmittance making them ideal for encapsulation of LEDs and other components where visibility is desired or important.

The foregoing invention has been described in accordance with the relevant legal standards, thus the description is exemplary rather than limiting in nature. Variations and modifications to the disclosed embodiment may become apparent to those skilled in the art and do come within the scope of the invention. Accordingly, the scope of legal protection afforded this invention can only be determined by studying the following claims.

## Claims

1. A transparent polyamide that is the reaction product of a mixture, comprising:
a fully hydrogenated dimer acid;
a linear, saturated C₆ to C₁₄ dicarboxylic acid;
a C₄ to C₈ alkylene diamine; and
a dipiperidine.

2. The transparent polyamide of claim 1 wherein the mixture further comprises a second diamine selected from 3-(Aminomethyl)-3,5,5-trimethylcyclohexanamine (isophorone diamine); piperazine; methylpentamethylenediamine; polyoxyalkylene diamine; poly(ethylene glycol) diamine; polypropylene glycol) diamine; and mixtures thereof.

3. The transparent polyamide of claim 1 wherein the mixture further comprises phosphoric acid or polyphosphoric acid.

4. The transparent polyamide of claim 1 wherein the alkylene diamine comprises tetramethylenediamine, pentamethylenediamine, hexamethylenediamine, octamethylenediamine, 2-methyl-1,5-pentanediamine, and mixtures thereof.

5. The transparent polyamide of claim 1 wherein said dipiperidine comprises 4,4'(1,3 propanediyl) bis-(piperidine).

6. The transparent polyamide of claim 1 wherein said polyamide has a viscosity at 210°C of from 5500 to 8000 mPas (55 to 80 Poise).

7. The polyamide of claim 1 wherein said polyamide has a glass transition temperature of from -10 to +1° C.

8. The transparent polyamide of claim 1 wherein said polyamide has a mandrel bend of -15 °C to -30 °C.

9. The transparent polyamide of claim 1 wherein said polyamide has a minimum transmittance of 88% at 800 to 850 nm and a maximum Gardner color of 1, wherein the transmittance was tested by measuring transmittance of light at 800 - 850 nm through a 2 mm thick sample of the polyamide and the Gardner color was tested using Gardner apparatus and a 2.54 mm (100 mil) sample of the polyamide.

10. A transparent polyamide composition comprising the transparent polyamide of claim 1 and one or more additives, preferably selected from antioxidant, light stabilizer, defoamer and mixtures thereof.

11. A method of forming a transparent polyamide comprising the steps of:
forming a reaction mixture by combining a fully hydrogenated dimer acid; a linear, saturated C₆ to C₁₄ dicarboxylic acid; an alkylene diamine; a dipiperidine and optionally a second diamine different from the alkylene diamine in a reaction vessel;
heating the reaction mixture in the reaction vessel until reaction is substantially complete;
removing volatile components from the reacted mixture;
removing the vacuum and cooling the reaction products to room temperature; and
recovering the formed polyamide.

12. The method of claim 13 wherein the alkylene diamine comprises comprises tetramethylenediamine, pentamethylenediamine, hexamethylenediamine, octamethylenediamine, 2-methyl-1,5-pentanediamine, and mixtures thereof.

13. The method of claim 13 wherein the dipiperidine is 4,4'(1,3 propanediyl) bis-(piperidine).

14. The method of claim 13 wherein the reaction mixture further comprises phosphoric acid or polyphosphoric acid.

15. The method of claim 13 comprising the further step of adding at least one additive to the reactant mixture or the reacted mixture.

## Patentansprüche

1. Transparentes Polyamid, das das Reaktionserzeugnis eines Gemisches ist, umfassend:
eine vollständig hydrierte Dimersäure;
eine lineare gesättigte C₆- bis C₁₄-Dicarbonsäure;
ein C₄- bis C₈-Alkylendiamin; und
ein Dipiperidin.

2. Transparentes Polyamid nach Anspruch 1, wobei das Gemisch ferner ein zweites Diamin umfasst, das aus Folgendem ausgewählt ist: 3-(Aminomethyl)-3,5,5-trimethylcyclohexanamin (Isophorondiamin); Piperazin; Methylpentamethylendiamin; Polyoxyalkylendiamin; Poly(ethylenglykol)diamin; Poly(propylenglykol)diamin; und Gemischen davon.

3. Transparentes Polyamid nach Anspruch 1, wobei das Gemisch ferner Phosphorsäure oder Polyphosphorsäure umfasst.

4. Transparente Polyamid nach Anspruch 1, wobei das Alkylendiamin Tetramethylendiamin, Pentamethylendiamin, Hexamethylendiamin, Octamethylendiamin, 2-Methyl-1,5-pentandiamin, und Gemische davon umfasst.

5. Transparentes Polyamid nach Anspruch 1, wobei das Dipiperidin 4,4'(1,3 Propandiyl)bis-(piperidin) umfasst.

6. Transparentes Polyamid nach Anspruch 1, wobei das Polyamid eine Viskosität bei 210 °C von 5500 bis 8000 mPas (55 bis 80 Poise) aufweist.

7. Polyamid nach Anspruch 1, wobei das Polyamid eine Glasübergangstemperatur von - 10 bis +1 °C aufweist.

8. Transparentes Polyamid nach Anspruch 1, wobei das Polyamid eine Dornbiegung von -15 °C bis -30 °C aufweist.

9. Transparentes Polyamid nach Anspruch 1, wobei das Polyamid eine minimale Durchlässigkeit von 88 % bei 800 bis 850 nm und eine maximale Gardner-Farbe von 1 aufweist, wobei die Durchlässigkeit durch Messen der Durchlässigkeit von Licht bei 800 - 850 nm durch eine 2 mm dicke Probe des Polyamids getestet wurde und die Gardner-Farbe unter Verwendung einer Gardner-Einrichtung und einer 2,54 mm (100 mil)-Probe des Polyamids getestet wurde.

10. Transparente Polyamidzusammensetzung, umfassend das transparente Polyamid nach Anspruch 1 und ein oder mehrere Hilfsstoffe, vorzugsweise ausgewählt aus einem Antioxidationsmittel, einem Lichtstabilisator, einem Entschäumer und Gemischen davon.

11. Verfahren zum Ausbilden eines transparenten Polyamids, die folgenden Schritte umfassend:
Ausbilden eines Reaktionsgemisches durch Kombinieren einer vollständig hydrierten Dimersäure; einer linearen gesättigten C₆- bis C₁₄-Dicarbonsäure; eines Alkylendiamins; eines Dipiperidins und optional eines zweiten Diamins, das sich von dem Alkylendiamin in einem Reaktionsgefäß unterscheidet;
Erhitzen des Reaktionsgemisches in dem Reaktionsgefäß, bis die Reaktion im Wesentlichen abgeschlossen ist;
Entfernen flüchtiger Komponenten aus dem reagierten Gemisch;
Entfernen des Vakuums und Abkühlen der Reaktionserzeugnisse auf Raumtemperatur; und
Gewinnen des ausgebildeten Polyamids.

12. Verfahren nach Anspruch 13, wobei das Alkylendiamin Tetramethylendiamin, Pentamethylendiamin, Hexamethylendiamin, Octamethylendiamin, 2-Methyl-1,5-pentandiamin, und Gemische davon umfasst.

13. Verfahren nach Anspruch 13, wobei das Dipiperidin 4,4'(1,3 Propandiyl)bis-(piperidin) ist.

14. Verfahren nach Anspruch 13, wobei das Reaktionsgemisch ferner Phosphorsäure oder Polyphosphorsäure umfasst.

15. Verfahren nach Anspruch 13, umfassend den weiteren Schritt des Zugebens von mindestens einem Hilfsstoff zu dem Reaktantengemisch oder dem reagierten Gemisch.

## Revendications

1. Polyamide transparent qui est le produit de réaction d'un mélange, comprenant :
un acide dimère entièrement hydrogéné ;
un acide dicarboxylique linéaire saturé en C₆ à C₁₄ ;
une alkylène diamine en C₄ à C₈; et
une dipipéridine.

2. Polyamide transparent selon la revendication 1, dans lequel le mélange comprend en outre une seconde diamine choisie parmi la 3-(aminométhyl)-3,5,5-triméthylcyclohexanamine (isophorone diamine) ; la pipérazine ; la méthylpentaméthylènediamine ; la polyoxyalkylène diamine ; la poly(éthylène glycol) diamine ; la poly(propylène glycol) diamine ; et leurs mélanges.

3. Polyamide transparent selon la revendication 1, dans lequel le mélange comprend en outre de l'acide phosphorique ou de l'acide polyphosphorique.

4. Polyamide transparent selon la revendication 1, dans lequel l'alkylène diamine comprend de la tétraméthylènediamine, de la pentaméthylènediamine, de l'hexaméthylènediamine, de l'octaméthylènediamine, de la 2-méthyl-1,5-pentanediamine et leurs mélanges.

5. Polyamide transparent selon la revendication 1, dans lequel ladite dipipéridine comprend de la 4,4'(1,3 propanediyl) bis-(pipéridine).

6. Polyamide transparent selon la revendication 1, dans lequel ledit polyamide a une viscosité à 210 °C de 5 500 à 8 000 MPa (55 à 80 poises).

7. Polyamide selon la revendication 1, dans lequel ledit polyamide a une température de transition vitreuse de -10 à +1 °C.

8. Polyamide transparent selon la revendication 1, dans lequel ledit polyamide a un pliage sur mandrin de -15 °C à -30 °C.

9. Polyamide transparent selon la revendication 1, dans lequel ledit polyamide a une transmittance minimale de 88 % à 800 à 850 nm et une couleur Gardner maximale de 1, la transmittance ayant été testée en mesurant la transmittance de la lumière de 800 à 850 nm à travers un échantillon de 2 mm d'épaisseur du polyamide et la couleur Gardner ayant été testée à l'aide d'un appareil Gardner et d'un échantillon de 2,54 mm du polyamide.

10. Composition de polyamide transparent comprenant le polyamide transparent de la revendication 1 et un ou plusieurs additifs, de préférence choisis parmi un antioxydant, un photostabilisant, un agent antimousse et leurs mélanges.

11. Procédé de formation d'un polyamide transparent, comprenant les étapes consistant à :
former un mélange réactionnel en combinant un acide dimère entièrement hydrogéné ; un acide dicarboxylique linéaire saturé en C₆ à C₁₄ ; une alkylène diamine ; une dipipéridine et éventuellement une seconde diamine différente de l'alkylène diamine dans une cuve de réaction ;
chauffer le mélange réactionnel dans la cuve de réaction jusqu'à ce que la réaction soit pratiquement terminée ;
éliminer les composants volatils du mélange ayant réagi ;
éliminer le vide et refroidir les produits de réaction à température ambiante ; et
récupérer le polyamide formé.

12. Procédé selon la revendication 13, dans lequel l'alkylène diamine comprend de la tétraméthylènediamine, de la pentaméthylènediamine, de l'hexaméthylènediamine, de l'octaméthylènediamine, de la 2-méthyl-1,5-pentanediamine et leurs mélanges.

13. Procédé selon la revendication 13, dans lequel la dipipéridine est la 4,4'(1,3 propanediyl) bis-(pipéridine).

14. Procédé selon la revendication 13, dans lequel le mélange réactionnel comprend en outre de l'acide phosphorique ou de l'acide polyphosphorique.

15. Procédé selon la revendication 13 comprenant l'étape supplémentaire consistant à ajouter au moins un additif au mélange réactif ou au mélange ayant réagi.
